Europäisches Patentamt

European Patent Office

Office européen des brevets

(19)

(11) Veröffentlichungsnummer : **0 221 375**
**B1**

(12) EUROPÄISCHE PATENTSCHRIFT

(45) Veröffentlichungstag der Patentschrift :
27.07.88

(51) Int. Cl.⁴ : **E 05 B   9/08**

(21) Anmeldenummer : 86113832.9

(22) Anmeldetag : 06.10.86

(54) Schliesszylinder zum bajonettartigen Einbau.

(30) Priorität : 30.10.85 FR 8516098

(43) Veröffentlichungstag der Anmeldung :
13.05.87 Patentblatt 87/20

(45) Bekanntmachung des Hinweises auf die Patenterteilung : 27.07.88 Patentblatt 88/30

(84) Benannte Vertragsstaaten :
DE ES FR GB IT

(56) Entgegenhaltungen :
DE-C-  293 738
US-A- 2 097 191

(73) Patentinhaber : NEIMAN
39 Avenue Marceau
F-92400 Courbevoie (FR)

(72) Erfinder : Neyret, Guy
11, rue du Fort
F-69340 Francheville (FR)

(74) Vertreter : Patentanwaltsbüro Cohausz & Florack
Postfach 14 01 47
D-4000 Düsseldorf 1 (DE)

## Beschreibung

Die Erfindung bezieht sich auf einen Schließzylinder zum Einbau von beiden Seiten einer Wand, die eine kreisförmige Öffnung mit Verlängerungen durch vier im wesentlichen rechteckige Aussparungen in kreuzförmiger Anordnung umfaßt.

Die Festigkeit von in relativ dünnen Wänden eingebauten Schlössern, wie z. B. Türen an Kraftfahrzeugen, hängt unmittelbar ab von der Art der benutzten Befestigung.

Es ist üblich, in der Wand eine kreisförmige Öffnung anzubringen, die durch kreuzförmige Aussparungen verlängert ist, und dem äußeren Teil des Schließzylinders, der durch die Wand hindurchgeht, eine entsprechende Form zu geben, wobei der Schließzylinder gehalten wird durch eine nicht zugängliche Gabel an der Wandfläche. Das Zusammenwirken des profilierten Teils des Schließzylinders mit der Aussparung gleicher Form der Wand untersagt die Drehung des feststehenden Teils des Schließzylinders.

Bei einem gewaltsamen Drehversuch jedoch ist der durch die Wand gebotene Widerstand unzureichend, da sie im geschwächten Bereich der Öffnung unmittelbar auf Knickung beansprucht wird. Ebenso ist auch die Eindrückfestigkeit oft unzulänglich.

Die Erfindung verfolgt das Ziel, diesen Nachteilen bekannter Schließzylinder abzuhelfen dank einem neuartigen Schließzylinder, der zudem einen sehr einfachen Einbau und Ausbau ermöglicht.

Zu diesem Zweck ist der erfindungsgemäße Schließzylinder dadurch gekennzeichnet, daß er einen Außenring enthält, der sich auf die Außenfläche der Wand abstützt und nach innen durch eine zylindrische Wand, die durch die genannte kreisförmige Öffnung hindurchgeht, verlängert wird, wobei diese Verlängerung radiale Ansätze aufweist, die mit dem Ring eine feste Einheit bilden und in den genannten Aussparungen sitzen, und wobei das Ende der zylindrischen Wand radiale Ansätze trägt, die in bezug auf die ersten Ansätze axial versetzt sind und von denen mindestens einer an einen der ersten Ansätze über eine einen Anschlag bildende Axialwand angeschlossen ist, wobei das Gehäuse des Schließzylinders an seinem wandseitigen Ende periphere Klauen umfaßt, die sich jeweils zwischen einen ersten und einen zweiten Ansatz des Rings setzen, wenn eine Verschiebung mit anschließender Drehung des genannten Gehäuses am Ring stattfindet, wobei mindestens einige der Ansätze mit mindestens einigen der Klauen des Zylindergehäuses in Eingriff gelangen und eine komprimierbare Dichtung zwischen der Stirnfläche des Schließzylinders an der Wand und dieser eingesetzt ist.

Der Einbau des erfindungsgemäßen Schließzylinders erfolgt auf sehr einfache Weise nach Einsetzen des Rings durch Annäherung des Zylindergehäuses und Drehung der Klauen zwischen den Ansätzen des Rings bis zum Einrasten und Anschlag gegen die die Ansätze verbindenden Axialwände.

In einer Ausführungsform der Erfindung sind die Mittel zum Einrasten der Klauen an den Ansätzen umkehrbar, wodurch ein Ausbau in umgekehrter Reihenfolge erleichtert wird. Bei einer Ausführungsvariante wirken die Einrastmittel nur in eine Richtung, und der Ausbau erfolgt durch Drücken des Zylindergehäuses gegen die Wand, wobei die Dichtung zusammengedrückt wird, und Drehen in umgekehrter Richtung.

Die Beständigkeit gegen gewaltsames Drehen, gegen Eindrücken und Wechselbeanspruchung wird stark erhöht, da die Wand um die Öffnung herum zwischen dem Ring und der angrenzenden Stirnfläche des Zylindergehäuses am ganzen Umfang zusammengedrückt wird statt an nur zwei Stellen, wie dies bei der üblichen Befestigung durch Gabel der Fall ist.

Die Erfindung wird besser verständlich beim Lesen der folgenden Beschreibung unter Bezugnahme auf die beigeheftete Zeichnung, in der

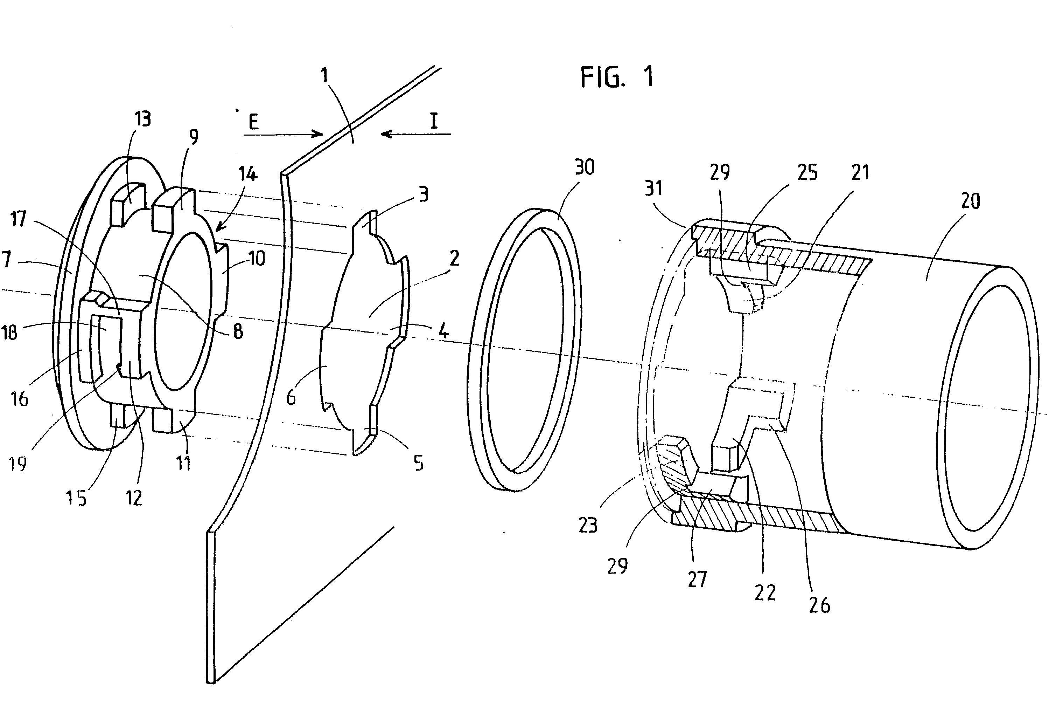

— Figur 1 eine auseinandergezogene perspektivische Schemaansicht nach einem Ausführungsbeispiel der Erfindung vor dem Einbau in eine Wand ist;

— Figur 2 ist eine perspektivische Schemaansicht, zum Teil im Schnitt, des Schließzylinders in Fig. 1 nach Einbau in die Tür;

— Figur 3 ist eine schematische Schnittansicht eines Gesperresystems nach einer Ausführungsform; und

— Figur 4 entspricht der Figur 3 für eine Variante.

Die Wand 1, an der der Schließzylinder angebracht werden soll, umfaßt in herkömlicher Weise eine kreisförmige Öffnung 2, die durch vier rechteckige Aussparungen 3, 4, 5, 6 in kreuzförmiger Anordnung verlängert ist. Der Schließzylinder umfaßt einen Außenring 7, der sich auf die Außenfläche E der Wand 1 abstützt und nach innen durch ein zylinderförmiges Rohrstück 8 verlängert ist, das durch die Öffnung 2 hindurchführt. Der Ring 7 umfaßt in herkömlicher Weise einen Schlüssellochdeckel, der vielleicht mit einer Dichtklappe (beide nicht dargestellt) versehen ist.

Das freie Ende des Rohrstücks 8 trägt vier radiale Ansätze 9, 10, 11, 12, die durch die Aussparungen 3 bzw. 4 bzw. 5 bzw. 6 gehen. Im Fugenbereich zwischen der Innenfläche des Rings 7 und dem Rohrstück 8 werden vier Ansätze 13, 14, 15, 16 gebildet, die im wesentlichen mit den Ansätzen 9, 10, 11, 12 gleich und in bezug dazu axial angeordnet sind. Die Ansätze 12 und 16 sowie die Ansätze 10 und 14 sind miteinander verbunden über eine Axialwand 17, wodurch ein einseitig offener Sitz 18 entsteht. Die Ansätze 12 und 10 umfassen einen radialen Zahn am Eingang der Öffnung des Sitzes 18.

Das Gehäuse 20 des Schließzylinders bildet eine Außenhülse, deren wandseitiges Ende mit vier inneren Umfanfangsklauen 21, 22, 23, 24 versehen ist. Die Klauen sind durch axiale Anschläge 25, 26, 27, 28 verlängert, wobei eine Einkerbung 29 zwischen den Klauen 21, 23 und den Anschlägen 25 bzw. 27 eingearbeitet ist. Eine komprimierbare Dichtung 30 ist zwischen der Innenfläche I der Wand 1 und dem angrenzenden Ende 31 des Zylindergehäuses 20 eingesetzt.

Der Einbau erfolgt mit Hilfe eines klassischen Bajonettsystems, wobei die Klauen 21, 22, 23, 24 zwischen den Ansätzen 9-13, 10-14, 11-15 und 12-16 gleiten. Am Ende der Drehung des Gehäuses 20 rasten die Zähne 19 in die Einkerbungen 29 ein und bringen das Gehäuse 20 zum Stillstand.

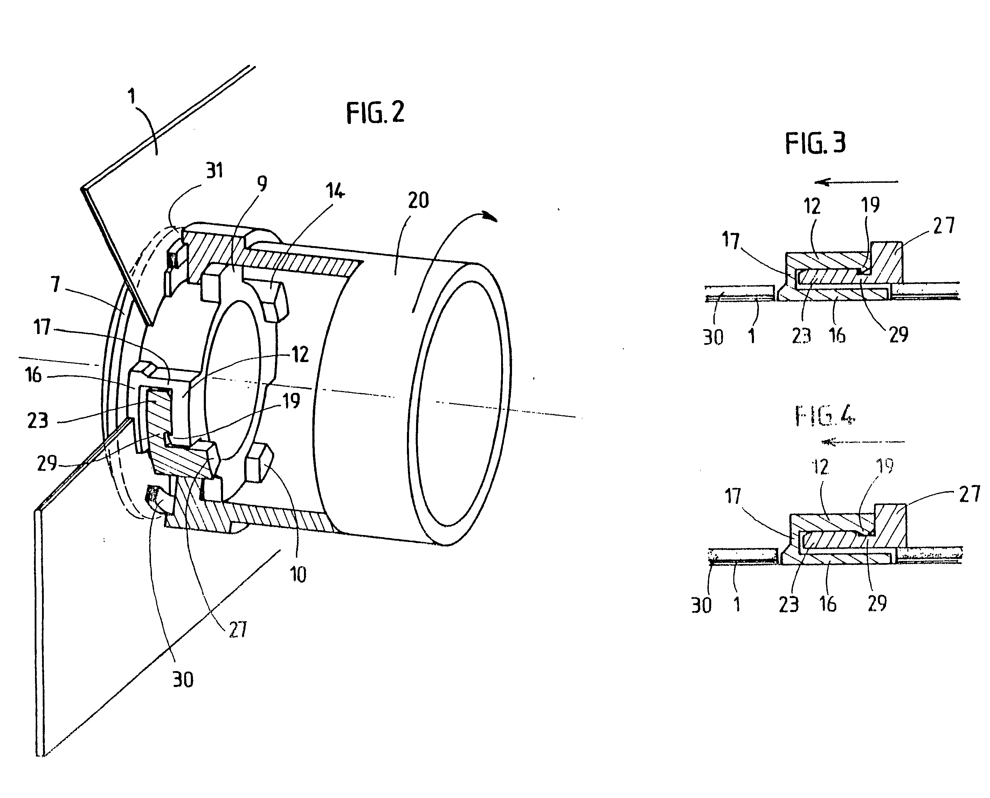

In der Ausführungsform der Figur 3 befindet sich die Einkerbung 29 am rechten Rand, und der Ausbau bedingt ein Zusammendrücken der Dichtung 30. Bei der Variante der Figur 4 ist der Rand der Einkerbung 29 abgeschrägt, so daß das Einrasten umgekehrt werden kann.

## Patentansprüche

1. Schließzylinder für einen Einbau von beiden Seiten einer Wand (1), umfassend eine kreisrunde Öffnung (2) mit Verlängerung durch vier im wesentlichen rechteckige Aussparungen (3) in kreuzförmiger Anordnung, dadurch gekennzeichnet, daß er umfaßt einen Außenring (7), der sich auf die Außenfläche (E) der Wand (1) abstützt und nach innen verlängert ist durch eine zylindrische Wand (8), die durch die genannte kreisrunde Öffnung (2) hindurchgeht, wobei die genannte zylindrische Wand (8) radiale Ansätze (13, 14, 15, 16) aufweist, die mit dem genannten Ring (7) fest verbunden sind und in den genannten Aussparungen (3, 4, 5, 6) sitzen, und das Ende der genannten zylindrischen Wand (8) radiale Ansätze (9, 10, 11, 12) trägt, die in bezug auf die ersten Ansätze (13, 14, 15, 16) axial versetzt und bei wenigstens einem von ihnen (12) an die ersten Ansätze (16) über eine axiale Wand (17) angeschlossen sind, die einen Anschlag bildet, wobei das Gehäuse (20) des Schließzylinders an seinem wandseitigen Ende (31) periphere Klauen (21, 22, 23, 24) umfaßt, die sich jeweils zwischen einen ersten (13, 14, 15, 16) und einen zweiten Ansatz (9, 10, 11, 12) des Rings (7) im Verlauf einer Verschiebung mit anschließendem Drehen des genannten Gehäuses (20) am Ring (7) setzen, und wobei mindestens einige (12, 10) der Ansätze mit mindestans einigen (23, 21) der Klauen des Schließzylindergehäuses gesperreartig zusammenwirken und eine komprimierbare Dichtung (30) zwischen das Ende (31) des Zylindergehäuses (20) an der Wand (1) und dieser Wand eingesetzt ist.

2. Schließzylinder gemäß Anspruch 1, dadurch gekennzeichnet, daß die Gesperremittel (19, 29) der Klauen (21, 22, 23, 24) an den Ansätzen (9, 10, 11, 12) umgekehrt werden können.

3. Schließzylinder gemäß Anspruch 1, dadurch gekennzeichnet, daß die Gesperremittel 19, 29) in einer Richtung wirken.

## Claims

1. Lock cylinder for fitment from either side of a wall (1) comprising a circular opening (2) with an extension-provided by four substantially rectangular recesses (3) in a cruciform arrangement, characterised in that it comprises an outer ring (7) which is braced on the outside surface (E) of the wall (1) and which is extended inwardly by a cylindrical wall (8) which passes through the said circular opening (2), the said cylindrical wall (8) having radial projections (13, 14, 15, 16) which are rigidly connected to the said ring (7) and which are seated in the said recesses (3, 4, 5, 6), the end of the said cylindrical wall (8) having radial projections (9, 10, 11, 12) which are axially offset in relation to the first projections (13, 14, 15, 16), at least one of them (12) being connected to the first projections (16) via an axial wall (17), which forms an abutment, the housing (20) of the lock cylinder having at its end (31) which is on the wall side peripheral claws (21, 22, 23, 24) which in each case fit between a first (13, 14, 15, 16) and a second projection (9, 10, 11, 12) on the ring (7) during the course of a displacement with subsequent rotation of the said housing (20) on the ring (7), at least some (12, 10) of the projections co-operating in locking fashion with at least some (23, 21) of the claws on the lock cylinder housing a compressible packing (30) being inserted between the end (31) of the cylinder housing (20) on the wall (1) and the wall itself.

2. Lock cylinder according to Claim 1, characterised in that the locking means (19, 29) of the claws (21, 22, 23, 24) on the projections (9, 10, 11, 12) can be reversed.

3. Lock cylinder according to Claim 1, characterised in that the locking means (19, 20) act in one direction.

## Revendications

1. Verrou à montage de part et d'autre d'une paroi (1) comportant un orifice circulaire (2) prolongé par quatre découpures (3) sensiblement rectangulaires disposées en croix, caractérisé par le fait qu'il comprend une bague externe (7) qui s'appuie sur la face externe (E) de la paroi (1) et est prolongée vers l'intérieur par une paroi cylindrique (8) traversant ledit orifice circulaire (2), ladite paroi cylindrique (8) comportant des oreilles radiales (13, 14, 15, 16) qui sont solidaires de ladite bague (7) et sont logées dans lesdites découpures (3, 4, 5, 6), et l'extrémité de ladite paroi cylindrique (8) porte des oreilles radiales (9, 10, 11, 12) qui sont décalées axialement par rapport aux premières oreilles (13, 14, 15, 16) et sont raccordées, pour au moins une d'entre elles (12), aux premières oreilles (16) par une paroi axiale (17) qui forme butée, le corps (20) du verrou comportant, à son extrémité (31) adjacente à la paroi, des pattes périphériques (21, 22, 23, 24) venant se loger chacune entre une première (13, 14, 15, 16) et une deuxième (9, 10, 11, 12) oreilles de la bague (7) au cours d'une translation suivie d'une rotation dudit corps (20) sur la bague (7), certaines (12, 10) au moins des oreilles coopèrent à encliquetage avec certaines (23, 21) au moins des pattes du corps du verrou, un joint compressible (30) étant interposé entre l'extrémité (31) du corps (20) de verrou adjacente à la paroi (1) et cette paroi.

2. Verrou selon la revendication 1, caractérisé par le fait que les moyens d'encliquetage (19, 29) des pattes (21, 22, 23, 24) sur les oreilles (9, 10, 11, 12) peuvent être inversés.

3. Verrou selon la revendication 1, caractérisé par le fait que les moyens d'encliquetage (19, 29) agissent dans une direction.

FIG. 1

E → | ← I

1

13 9 14 10
17 7 8
18 16 19 15 12 11

3
2
4
6
5

30 31 29 25 21 20

23 29 27 22 26

0 221 375

FIG. 2

FIG. 3

FIG. 4

0 221 375